# EUROPEAN PATENT APPLICATION

(11) **EP 4 637 045 A1**
(43) Date of publication of application: **22.10.2025**
(21) Application number: 24784000.2
(22) Date of filing: 05.03.2024
(51) Int. Cl.: H04B 7/06

(54) **BEAM TRAINING METHOD, AND APPARATUS AND STORAGE MEDIUM**

(30) Priority: 06.04.2023 CN 202310411513
(71) Applicant: ZTE Corporation, Shenzhen, Guangdong 518057 (CN)
(72) Inventor: MIAO, Ting, Shenzhen, Guangdong 518057 (CN); LU, Youxiong, Shenzhen, Guangdong 518057 (CN); CHEN, Jie, Shenzhen, Guangdong 518057 (CN); HE, Haigang, Shenzhen, Guangdong 518057 (CN); BI, Feng, Shenzhen, Guangdong 518057 (CN); XING, Weimin, Shenzhen, Guangdong 518057 (CN); HU, Yuzhou, Shenzhen, Guangdong 518057 (CN)
(74) Representative: Ziebig Hengelhaupt Intellectual Property Attorneys Patentanwaltskanzlei PartGmbB
(86) International application number: PCT/CN2024/080191
(87) International publication number: WO 2024/207915

(57) **Abstract**

Provided are a beam training method, and an apparatus and a storage medium. The beam training method comprises: determining first beam training information, wherein the first beam training information comprises a first identifier of a first communication node and a transmission beam identifier of the first communication node; and sending the first beam training information on the basis of a transmission beam of the first communication node.

## Description

The present disclosure claims a priority to Chinese Patent Application No. 202310411513.0, and filed on April 06, 2023, the entire content of which is incorporated into the present application by reference.

### TECHNICAL FIELD

The present disclosure relates to the field of communication technologies, and in particular, to a beam training method, an apparatus, and a storage medium.

### BACKGROUND

In a sidelink (SL) communication system, when services need to be transmitted between user equipments (UEs), the services between the UEs are not forwarded by a base station, but are directly transmitted from a source UE to a target UE through the SL. For short-distance communication users that can apply the SL communication, the SL communication not only saves radio spectrum resources, but also reduces the data transmission pressure of a core network, which can reduce system resource occupancy, increase the spectrum efficiency of cellular communication systems, reduce communication delays, and can save network operating costs.

### SUMMARY

In a first aspect, the embodiments of the present disclosure provide a beam training method, applied to a first communication node. The beam training method includes:
determining first beam training information, where the first beam training information includes a first identifier of the first communication node and a transmission beam identifier of the first communication node; and
sending the first beam training information based on a transmission beam of the first communication node.

In a second aspect, the embodiments of the present disclosure provide a beam training method, applied to a second communication node. The beam training method includes:
receiving first beam training information sent by a first communication node, where the first beam training information includes a first identifier of the first communication node and a transmission beam identifier of the first communication node;
obtaining beam report information based on the first beam training information, where the beam report information includes the first identifier of the first communication node and a preferred transmission beam identifier of the first communication node; and
sending the beam report information.

In a third aspect, the embodiments of the present disclosure provide a communication apparatus. The communication apparatus includes:
a processing unit, configured to determine first beam training information, the first beam training information includes a first identifier of the first communication node and a transmission beam identifier of the first communication node; and
a sending unit, configured to send the first beam training information based on a transmission beam of the first communication node.

In a fourth aspect, the embodiments of the present disclosure provide a communication apparatus. The communication apparatus includes:
a receiving unit, configured to receive first beam training information sent by a first communication node, where the first beam training information includes a first identifier of the first communication node and a transmission beam identifier of the first communication node;
a processing unit, configured to obtain beam report information based on the first beam training information, where the beam report information includes the first identifier of the first communication node and a preferred transmission beam identifier of the first communication node;
a sending unit, configured to send the beam report information.

In a fifth aspect, the embodiments of the present disclosure provide a communication apparatus. The communication apparatus includes: a processor and a memory; the memory has stored instructions executable by the processor; the processor is configured to execute the instructions, so that the communication apparatus implements the method provided in any one of the first aspect or the second aspect above.

In a sixth aspect, the embodiments of the present disclosure provide a computer readable storage medium. The computer readable storage medium stores computer instructions, and the computer instructions, when executed on a computer, cause the computer to perform the method provided in any one of the first aspect or the second aspect above.

In a seventh aspect, the embodiments of the present disclosure provide a computer program product containing computer instructions, and the computer instructions, when executed on a computer, cause the computer to perform the method provided in any one of the first aspect or the second aspect above.

### BRIEF DESCRIPTION OF THE DRAWINGS

The drawings are used to provide a further understanding of the technical solutions of the present disclosure, constitute a part of the specification, are used to explain the technical solutions of the present disclosure together with the embodiments of the present disclosure, and do not limit the technical solutions of the present disclosure.
FIG. 1 is a structural schematic diagram of a communication system according to some embodiments.
FIG. 2 is a schematic flowchart of a beam training method according to some embodiments.
FIG. 3 is a schematic diagram of a first communication node sending first beam training information according to some embodiments.
FIG. 4 is another schematic diagram of a first communication node sending first beam training information according to some embodiments.
FIG. 5 is yet another schematic diagram of a first communication node sending first beam training information according to some embodiments.
FIG. 6 is yet another schematic diagram of a first communication node sending first beam training information according to some embodiments.
FIG. 7 is a schematic flowchart of another beam training method according to some embodiments.
FIG. 8 is a schematic diagram of a second communication node sending beam report information according to some embodiments.
FIG. 9 is a schematic diagram of components of a communication apparatus according to some embodiments.
FIG. 10 is a schematic diagram of components of another communication apparatus according to some embodiments.
FIG. 11 is a structural schematic diagram of a communication apparatus according to some embodiments.

### DETAILED DESCRIPTION

The technical solutions in the embodiments of the present disclosure will be described clearly and completely below in conjunction with the drawings in the embodiments of the present disclosure, and obviously, the described embodiments are only a part of the embodiments of the present disclosure, but not all of the embodiments. Based on the embodiments in the present disclosure, all other embodiments obtained by those ordinary skilled without creative efforts shall fall within the protection scope of the present disclosure.

The terms "first" and "second", etc., are used for descriptive purposes only, but cannot be understood as indicating or implying relative importance or implicitly specifying the number of the indicated technical features. Thus, features defined with "first" or "second", etc., may explicitly or implicitly include one or more such features. In the description of the present disclosure, unless otherwise specified, "multiple / a/the plurality of" means two or more.

In the embodiments of the present disclosure, the expressions, such as "exemplary / exemplarily" or "for example", are used to represent an example, an illustration or an explanation. Any embodiment or design solution described with "exemplary / exemplarily" or "for example" in the embodiments of the present disclosure should not be construed as preferred or advantageous over other embodiments or design solutions. Rather, the usage of the expressions, such as "exemplary / exemplarily" or "for example", is intended to present relevant concepts in a detailed manner.

Sidelink communication may also be referred to as side-link communication, direct communication, or proximity link communication, or PC5 interface link communication, or link communication between terminal devices. Sidelink communication is wireless communication directly performed between a plurality of UEs (e.g., two UEs). In such sidelink communication, a plurality of UEs that are geographically close to each other can communicate directly without passing through any network device. A data transmission in the direct communication is different from that of the typical cellular network communication, the typical cellular network communication includes an uplink (UL) transmission (that is, a UE sends data to a network device) and a downlink (DL) transmission (that is, a network device sends data to a UE); but in the sidelink communication, data is directly sent from a UE at a sending end to a UE at a receiving end through an air interface such as a PC5 interface, without passing through any network device. In general, sidelink control information (SCI) includes first-stage SCI (e.g., SCI format 1-A, etc.) and second-stage SCI (e.g., SCI format 2-A, SCI format 2-B, SCI format 2-C, etc.), and the first-stage SCI is carried on a physical sidelink control channel (PSCCH), and the second-stage SCI is carried on a physical sidelink shared channel (PSSCH). Sidelink communication modes include but are not limited to device-to-device (Device to Device, D2D) communication (e.g., early warning communication for disasters such as earthquakes and fires) and vehicle-to-everything (V2X) communication (such as for remote driving, unmanned driving, etc.). The sidelink communication has various advantages (e.g., reducing data transmission load on the core network, system resource consumption, transmission power consumption and network operation cost, and saving radio spectrum resources and improving spectrum utilization of the cellular wireless network system). However, how to perform beam training between UEs to determine a preferred transmission beam used when communicating between UEs, is a technical problem that needs to be solved urgently.

Based on this, the embodiments of the present disclosure provide a beam training method, where a first communication node determines first beam training information, and sends the first beam training information based on a transmission beam of the first communication node, so that a second communication node receiving the first beam training information performs measurement according to the first beam training information, to acquire a preferred transmission beam identifier of the first communication node, and then sends beam report information including the preferred transmission beam identifier of the first communication node to the first communication node, to inform the first communication node of a preferred transmission beam to be used for communication. Thus, the beam training between communication nodes (i.e., UEs) is completed, and the preferred transmission beam used for communication between UEs is determined.

The solutions in the embodiments of the present disclosure will be introduced below in conjunction with the drawings.

The technical solutions provided in the embodiments of the present disclosure may be applied to various mobile communication networks, for example, new radio (New Radio, NR) mobile communication networks using the fifth generation mobile communication technology (5th generation mobile networks, 5G), future mobile communication networks or multiple communication fusion systems, etc., which are not limited to the embodiments of the present disclosure.

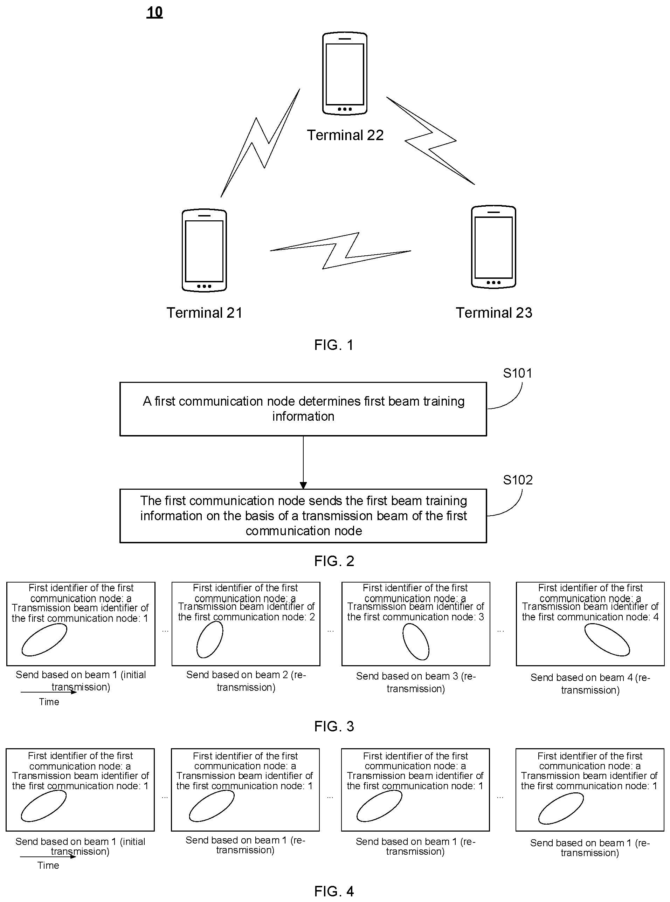

FIG. 1 is a structural schematic diagram of a communication system according to some embodiments. As shown in FIG. 1, a communication system 10 includes a plurality of terminals (e.g., terminal 21, terminal 22, and terminal 23). A terminal may communicate with a terminal. The communication between a terminal and a terminal refers to direct communication between two terminals, and by taking device-to-device (device to device, D2D) communication as an example, a terminal performing D2D communication may be referred to as a D2D terminal, and a link between two terminals performing D2D communication may be referred to as a pair of D2D links, and the two terminals in the pair of D2D links may be a receiving end and a sending end corresponding to each other. In a transmission, a terminal may be a sending end and another terminal may be a receiving end. If the two terminals both support the simultaneous sending and receiving function, each of the D2D terminals may be both a sending end and a receiving end at the same time.

In some embodiments, each terminal of the plurality of terminals (e.g., terminal 21) is a device with a wireless transceiver function, may be deployed on land (including indoors or outdoors, handheld, worn or in-vehicle); may also be deployed on the water (e.g., on a ship, etc.); may also be deployed in the air (e.g., on an airplane, a balloon and a satellite, etc.). The terminal may be a mobile phone, a pad, a computer with a wireless transceiver function, a virtual reality (Virtual Reality, VR) terminal, an augmented reality (Augmented Reality, AR) terminal, a wireless terminal in industrial control, a wireless terminal in self driving, a wireless terminal in remote medical, a wireless terminal in a smart grid, a wireless terminal in transportation safety, a wireless terminal in a smart city, a wireless terminal in a smart home, etc. The embodiments of the present disclosure do not limit the application scenarios. The terminal sometimes may also be referred to as a user, a user equipment (UE), an access terminal, a UE unit, a UE station, a mobile station, a mobile platform, a remote station, a remote terminal, a mobile device, a UE terminal, a wireless communication device, a UE agent, or a UE apparatus, etc., which is not limited to the embodiments of the present disclosure.

It should be understood that, FIG. 1 is an exemplary structural diagram, and a number of devices included in the communication system shown in FIG. 1 is not limited thereto, and for example, the number of terminals is not limited thereto. Furthermore, in addition to the devices shown in FIG. 1, the communication system shown in FIG. 1 may also include other devices, which is not limited thereto.

As shown in FIG. 2, the embodiments of the present disclosure provide a beam training method, the method is applied to a first communication node and the method includes the following contents.

S101, a first communication node determines first beam training information.

In an SL communication system, the first communication node may be understood as a communication node that wants to perform transmission beam training. Exemplarily, the first communication node may be the terminal 21 in the above communication system 10.

In some embodiments, the first beam training information includes a first identifier of the first communication node and a transmission beam identifier of the first communication node. The first identifier of the first communication node is an identifier used to identify the first communication node and related to beam training. The first identifier of the first communication node may be allocated by the first communication node itself, or may be configured or pre-configured for the first communication node by a higher layer entity. The first identifier of the first communication node may also be understood as an identifier used to identify the first communication node and related to a beam. In some embodiments, the first beam training information is applicable to beam-based operations (e.g., at least one of beam maintenance, beam measurement, interference measurement, and channel measurement). As an example, the first identifier of the first communication node may also be a source identifier of the first communication node.

It should be noted that, the configuration and pre-configuration and their variants in the embodiments of the present disclosure generally refer to that: the configuration generally comes from a network or a base station, and is sent from the network or base station to a communication node (e.g., UE) through signaling; and the pre-configuration is generally, a configuration provided by other higher layer entities (e.g., a higher layer of the communication node itself, other network entities, etc.). In the embodiments of the present disclosure, the higher layer entity represents the base station, the network, or other higher layer entities. In the embodiments of the present disclosure, "carry" and "indicate" and their variants have the same meaning. For example, "carrying certain information" may also be understood as "indicating certain information", and "carrying certain information" may also be understood as "containing / including / comprising certain information". The beam in the embodiments of the present disclosure may be a resource (e.g., a spatial filter, a precoding matrix, an antenna port, an antenna weight vector or an antenna weight matrix, etc.). In the embodiments of the present disclosure, "a channel or signal including certain information" may be understood as "a channel or signal carrying certain information", or "a channel or signal containing certain information", or "a channel or signal indicating certain information".

In some embodiments, the first identifier of the first communication node may also have other names (e.g., may also be referred to as an additional identifier of the first communication node), which is not limited to the embodiments of the present disclosure.

S102, the first communication node sends the first beam training information based on a transmission beam of the first communication node.

In some embodiments, sending, by the first communication node, the first beam training information based on the transmission beam of the first communication node, may be understood as that: the first communication node uses a transmission beam corresponding to the transmission beam identifier of the first communication node in the first beam training information to send the first beam training information.

In some embodiments, the first beam training information may be sent based on any SL signal or SL channel. Exemplarily, the first beam training information may be sent based on any one of a physical sidelink control channel (PSCCH), a physical sidelink shared channel (PSSCH), a sidelink synchronization signal block (sidelink-synchronization signal/PSBCH block, S-SSB), or a physical sidelink feedback channel (PSFCH).

Generally, if a certain channel has a corresponding demodulation reference signal (DMRS), the demodulation reference signal corresponding to the channel is sent at the same time when the channel is sent, and for simplicity of description, sending a certain channel in the present disclosure means sending the channel and the demodulation reference signal corresponding to the channel. For example, sending a PSCCH means sending the PSCCH and a demodulation reference signal of the PSCCH, and sending a PSSCH means sending the PSSCH and a DMRS of the PSSCH.

As an example, the physical sidelink control channel (PSCCH), the physical sidelink shared channel (PSSCH), the sidelink synchronization signal block (S-SSB) and the physical sidelink feedback channel (PSFCH) may also have other names. For example, the physical sidelink control channel (PSCCH) may also be referred to as a physical side-link control channel, the physical sidelink shared channel (PSSCH) may also be referred to as a physical side-link shared channel, the sidelink synchronization signal block (S-SSB) may also be referred to as a physical side-link synchronization signal block, and the physical sidelink feedback channel (PSFCH) may also be referred to as a physical side-link feedback channel, which is not limited to the embodiments of the present disclosure.

In some embodiments, the first beam training information is sent based on the PSSCH, and the PSSCH may also include other signals sent together with the first beam training information (e.g., a channel state information-reference signal (CSI-RS), a phase tracking-reference signal (PT-RS), etc.).

A sending mode of the first beam training information is introduced below.

Example 1, the first beam training information is sent through a physical sidelink shared channel, and the first identifier of the first communication node and the transmission beam identifier of the first communication node are carried on the physical sidelink shared channel and/or on a physical sidelink control channel associated with the physical sidelink shared channel. The physical sidelink control channel associated with the physical sidelink shared channel may be understood as a channel for scheduling the physical sidelink shared channel, that is, the PSCCH may schedule the PSSCH and second-stage SCI on the PSSCH.

For example, the first beam training information is sent through the PSSCH, and the first identifier of the first communication node is carried in first-stage sidelink control information (SCI) of the PSCCH, that is, in the 1st-stage SCI; or the first identifier of the first communication node is carried in second-stage sidelink control information (2nd-stage SCI) or a media access control control element (MAC CE) of the PSSCH; or a part of bits of the first identifier of the first communication node are carried in the second-stage SCI of the PSCCH, and remaining bits are carried in the MAC CE of the PSSCH. The transmission beam identifier of the first communication node is carried in the first-stage SCI of the PSCCH; or the transmission beam identifier of the first communication node is carried in the second-stage SCI or MAC CE of the PSSCH; or a part of bits of the transmission beam identifier of the first communication node are carried in the second-stage SCI of the PSCCH, and remaining bits are carried in the MAC CE of the PSSCH; or, the first identifier of the first communication node and the transmission beam identifier of the first communication node are carried in the MAC CE of the PSSCH; or, the first identifier of the first communication node and the transmission beam identifier of the first communication node are carried in the second-stage SCI of the PSSCH.

As an example, the PSSCH may also contain SL data. For example, the SL data may be higher layer data or higher layer signaling, and for example, the higher layer data may be any data from a higher layer, and the higher layer signaling may be any signaling from a higher layer, and exemplarily, the higher layer signaling may be a signaling or a message during establishment of a sidelink unicast link.

In some embodiments, the higher layer signaling includes but is not limited to a radio resource control (RRC), an MAC CE, and other signalings (e.g., sidelink RRC reconfiguration (sidelink RRC Reconfiguration) signaling, sidelink UE capability transfer, sidelink channel state information MAC CE, inter-UE coordination information MAC CE, etc.) other than the physical layer signaling.

In some embodiments, the first training beam information is sent through the PSSCH, the first-stage SCI of the PSSCH indicates a format of the second-stage SCI (i.e., 2nd-stage SCI format), and the second-stage SCI includes the first beam training information. That is, the first training beam information is contained in the second-stage SCI on the PSSCH, and the first-stage SCI on the PSCCH associated with the PSSCH indicates the format of the second-stage SCI.

In some embodiments, the first training beam information is sent through the PSSCH (e.g., carried in a MAC CE on the PSSCH), and the first-stage SCI on the PSCCH associated with the PSSCH or the second-stage SCI on the PSSCH contains beam training indication information, and the beam training indication information is used to indicate whether the PSSCH carries the first beam training information.

For example, if the beam training indication information is contained in the MAC CE of the PSSCH sent by the first communication node, the first communication node may indicate whether the MAC CE of the PSSCH contains the beam training indication information (that is, whether the MAC CE of the PSSCH includes the first identifier of the first communication node and the transmission beam identifier of the first communication node) in the second-stage SCI of the PSSCH. The beam training indication information may help other communication nodes that receive the PSSCH to judge whether they need to further decode the PSSCH; and if other communication nodes find that the PSSCH is not sent for them and the PSSCH does not include the beam training information, they do not need to decode the PSSCH; and if other communication nodes find that the PSSCH contains the beam training information, they need to decode the PSSCH to acquire the beam training information regardless of whether the PSSCH is sent for them. Using the beam training indication information may reduce unnecessary decoding of the PSSCH to some extent.

Example 2, the first beam training information is sent through the sidelink synchronization signal block (S-SSB), and the first identifier of the first communication node and the transmission beam identifier of the first communication node are carried on at least one of a physical sidelink broadcast channel (PSBCH), a sidelink primary synchronization signal (SL primary synchronization signal, S-PSS) sequence or a sidelink secondary synchronization signal (SL secondary synchronization signal, S-SSS) sequence.

For example, the first identifier of the first communication node and the transmission beam identifier of the first communication node are carried on the PSBCH (including carried in a payload of the PSBCH, or carried in a DMRS of the PSBCH, or a part carried in a payload of the PSBCH and another part carried in a DMRS of the PSBCH); for another example, the first identifier of the first communication node is carried in the S-PSS sequence and/or the S-SSS sequence, and the transmission beam identifier of the first communication node is carried on the PSBCH; for another example, the transmission beam identifier of the first communication node is carried in the S-PSS sequence and/or the S-SSS sequence, and the first identifier of the first communication node is carried on the PSBCH; for another example, the first identifier of the first communication node and the transmission beam identifier of the first communication node are carried in the S-PSS sequence and/or the S-SSS sequence. A mode in which the first identifier of the first communication node is carried in the S-PSS sequence and/or the S-SSS sequence is to generate the S-PSS sequence and the S-SSS sequence based on the first identifier of the first communication node.

In some embodiments, the first beam training information is sent through the S-SSB, and the S-PSS sequence in the S-SSB is used to indicate that the S-SSB is used for synchronization or beam training, that is, the S-PSS sequence in the S-SSB is used to indicate that the S-SSB is used for synchronization, or used to indicate that the S-SSB is used for beam training. For example, a set A of S-PSS sequences for beam training is generated by any one of network configuration, pre-configuration or pre-definition. Exemplarily, the set A does not overlap with a set B for the generated S-PSS sequences for synchronization, and for example, the set A is {2} and the set B is {0, 1}. If an S-PSS sequence of an S-SSB is generated based on a value in the set A, the S-SSB is used for beam training; if an S-PSS sequence of an S-SSB is generated based on a value in the set B, the S-SSB is used for synchronization.

The pre-configuration may be understood as being pre-configured when the communication node leaves the factory, and may be modified later by the network or manually, while the pre-definition is already specified in a communication protocol and cannot be changed.

Example 3, the first beam training information is sent through the physical sidelink feedback channel (PSFCH), that is, the first identifier of the first communication node and the transmission beam identifier of the first communication node are carried on the PSFCH. The PSFCH may be a PSFCH with a new format, which may at least carry the first identifier of the first communication node and the transmission beam identifier of the first communication node. In some embodiments, the PSFCH may also carry other information (e.g., hybrid automatic repeat request (HARQ) feedback information, or conflict information, etc.), and the conflict information is used to indicate that a conflict has occurred in PSSCH reserved resources of a third-party UE or a sender UE of the first communication node. For example, if the first communication node finds that an SL transmission to be received conflicts with an SL transmission of the third-party UE, the first communication node may choose to send the conflict information to the third-party UE or its own sender UE.

In some embodiments, the first communication node sending the first beam training information may be sending a channel or signal including the first beam training information, that is, the first beam training information is carried on an SL channel or an SL signal. A transmission type of the channel or signal including the first beam training information, includes at least one of: unicast, multicast, or broadcast. For example, the channel or signal including the first beam training information sent by the first communication node may be any one of the following.
1) a PSSCH sent to a specific single communication node (i.e., unicast).
2) a PSSCH sent to a specific group of communication nodes (i.e., multicast).
3) a PSSCH for which any communication node may be the receiving end (i.e., broadcast).
4) an S-SSB sent to a specific single communication node.
5) an S-SSB sent to a specific group of communication nodes.
6) an S-SSB for which any communication node may be the receiving end.
7) a PSFCH sent to a specific single communication node.

In some embodiments, the first communication node may send PSFCHs to one or more communication nodes, on a same time resource. If a plurality of PSFCHs are sent to a plurality of communication nodes on the same time resource, the first communication node carries the first identifier of the first communication node and the transmission beam identifier of the first communication node corresponding to each PSFCH, in the each PSFCH, respectively; or the first communication node selects any one PSFCH to carry the first identifier of the first communication node and the transmission beam identifier of the first communication node corresponding to the PSFCH; or the first communication node carries, in a predefined PSFCH (e.g., a PSFCH with a highest priority), the first identifier of the first communication node and the transmission beam identifier of the first communication node corresponding to the PSFCH. The transmission beam corresponding to the PSFCH may be understood as the transmission beam of the PSFCH, or the transmission beam of a PSSCH corresponding to the PSFCH.

In some embodiments, whether the first communication node sends the first beam training information depends on implementations of the first communication node.

In some embodiments, when the first communication node has SL data to be sent, the first communication node sends the SL data together with the beam training information. The beam training information contains the first identifier of the first communication node and the transmission beam identifier of the first communication node.

In some embodiments, when the first communication node has SL data to be sent, the first communication node sends the SL data together with the beam training information. The beam training information only contains the transmission beam identifier of the first communication node, that is, the beam training information may not contain the first identifier of the first communication node. For example, when the first communication node sends the SL data, it already contains a source identifier (that is, a source ID corresponding to the SL data) of the first communication node. The second communication node, after receiving the SL data and the beam training information, may know that the beam training information is beam training information of the communication node corresponding to the source ID, according to the source ID corresponding to the SL data.

In some embodiments, the first beam training information is used for at least one of beam maintenance, beam measurement, interference measurement, and channel measurement. For example, a UE (denoted as UE 1) transmits the beam training information, and other UE (denoted as UE 2) may, by measuring a signal containing the beam training information sent by the UE 1 or a reference signal corresponding to a channel containing the beam training information, acquire a quality of the transmission beam and/or reception beam on a link from the UE 1 to the UE 2, or acquire a quality of a radio channel (for example, channel state information) with the UE 1, or acquire the interference caused by the UE 1 to the UE 2.

In some embodiments, the channel or signal including the first beam training information may also include a channel state information request. For example, the channel or signal including the first beam training information is transmitted by unicast, and the channel or signal including the first beam training information also includes the channel state information request, so that the communication node that receives the channel or signal including the first beam training information determines whether to report channel state information to the first communication node according to the received channel state information request. For example, if the channel state information request is set to 1, the channel state information is reported to the first communication node, otherwise, the channel state information is not reported to the first communication node.

In some embodiments, the channel or signal including the first beam training information may also include other data, and the other data may be any sidelink information other than the first beam training information, and for example, the other data includes higher layer data, a higher layer signaling, broadcast information, or HARQ-related information.

That is, the first communication node sending the first beam training information, may be that the first communication node sends the first beam training information through the channel or signal, where the channel or signal may include the first beam training information and may also include other data.

It is explained in detail below with reference to detailed examples that the first communication node sends the first beam training information based on the transmission beam of the first communication node.

Example 1, the first communication node sends the first beam training information through a sidelink channel or a sidelink signal on different time resources based on different transmission beams.

For example, the first communication node sends the first beam training information through the PSSCH, which may be an initial transmission and a re-transmission of the PSSCH. For each transmission of the PSSCH, the PSSCH contains the first beam training information, that is, contains the first identifier of the first communication node and the transmission beam identifier used for the current PSSCH transmission. This mode is applicable to broadcast or multicast, because for broadcast or multicast, positions of a plurality of second communication nodes (also referred to as target communication nodes) with respect to the first communication node may be different, therefore, the first communication node needs to send the first beam training information according to different transmission beams, so that each second communication node may receive the first beam training information. When the first communication node and the second communication node are in unicast communication, if the first communication node has acquired one or more preferred transmission beams that may be used when sending the first beam training information to the second communication node, then this sending mode is also suitable for sending unicast to the second communication node, and the same beam may also be used on different time resources when sending unicast to the second communication node.

Exemplarily, FIG. 3 is a schematic diagram of a first communication node sending first beam training information according to some embodiments. Assuming that the transmission beam of the first communication node includes beam 1, beam 2, beam 3 and beam 4, the first communication node may send an initial transmission of the PSSCH based on the beam 1, and the sent PSSCH includes first identifier a of the first communication node and transmission beam identifier 1 of the first communication node. Afterwards, the first communication node may send a re-transmission of the PSSCH based on the beam 2, and the sent PSSCH includes the first identifier a of the first communication node and transmission beam identifier 2 of the first communication node. Afterwards, the first communication node may send a re-transmission of the PSSCH based on beam 3, and the sent PSSCH includes the first identifier a of the first communication node and transmission beam identifier 3 of the first communication node. Afterwards, the first communication node may send a re-transmission of the PSSCH based on beam 4, and the sent PSSCH includes the first identifier a of the first communication node and transmission beam identifier 4 of the first communication node.

Example 2, the first communication node sends the first beam training information through a sidelink channel or a sidelink signal on different time resources based on the same transmission beam.

For example, the first communication node sends the first beam training information through the PSSCH, which may be an initial transmission and a re-transmission of the PSSCH, and for each transmission of the PSSCH, the PSSCH contains the first beam training information, that is, contains the first identifier of the first communication node and the transmission beam identifier used for the current PSSCH transmission. This mode is suitable for unicast, because the first communication node may have acquired one or more preferred transmission beams that may be used when unicasting to the second communication node, and the first communication node may select a preferred transmission beam for the initial transmission and the re-transmission of the PSSCH (containing the first beam training information).

Exemplarily, FIG. 4 is another schematic diagram of a first communication node sending first beam training information according to some embodiments. Assuming that the preferred transmission beam selected by the first communication node is beam 1, the first communication node may send the initial transmission and re-transmission of the PSSCH based on the beam 1, and each transmission of the PSSCH includes the first identifier a of the first communication node and the transmission beam identifier 1 of the first communication node.

Example 3, the first communication node selects a plurality of transmission beams to send the first beam training information through a physical sidelink channel or a physical sidelink signal.

For example, the first communication node sends the first beam training information through the PSSCH, and for each transmission of the PSSCH, the same transmission beam or different transmission beams may be used, and for each transmission of the PSSCH, the PSSCH contains the first beam training information, that is, contains the first identifier of the first communication node and the transmission beam identifier used for the current PSSCH transmission. This mode is applicable to unicast, because the first communication node may have acquired one or more preferred transmission beams that may be used when sending the PSSCH to the second communication node which has established a unicast connection with the first communication node, the first communication node may select one or more preferred transmission beams for the initial transmission and the re-transmission of the PSSCH.

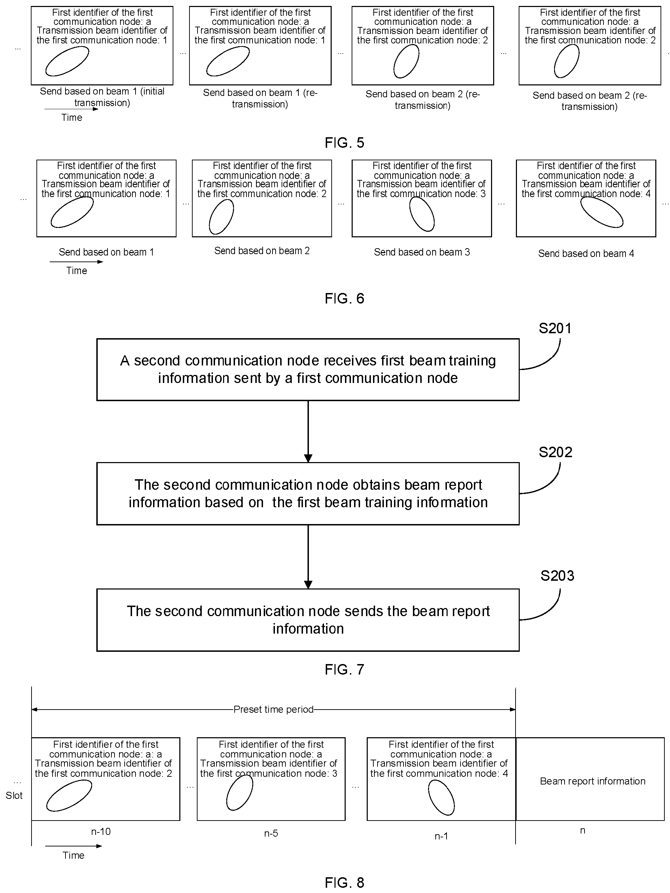

Exemplarily, FIG. 5 is another schematic diagram of a first communication node sending first beam training information according to some embodiments. Assuming that the preferred transmission beams selected by the first communication node are beam 1 and beam 2, the first communication node may send an initial transmission of the PSSCH based on the beam 1. The sent PSSCH includes the first identifier a of the first communication node and the transmission beam identifier 1 of the first communication node. Afterwards, the first communication node may send a re-transmission of the PSSCH based on the beam 1, and the sent PSSCH includes the first identifier a of the first communication node and the transmission beam identifier 1 of the first communication node. Afterwards, the first communication node may send a re-transmission of the PSSCH based on the beam 2, and the sent PSSCH includes the first identifier a of the first communication node and the transmission beam identifier 2 of the first communication node. Afterwards, the first communication node may send a re-transmission of the PSSCH based on the beam 2, and the sent PSSCH includes the first identifier a of the first communication node and the transmission beam identifier 2 of the first communication node.

Example 4, the first communication node sends the first beam training information through a physical sidelink channel or a physical sidelink signal on different time resources based on different transmission beams.

For example, the first communication node sends the first beam training information through the PSSCH, and the channels or signals including the first beam training information on different time resources are different PSSCHs, and for each transmission of the PSSCH by the first communication node, the PSSCH contains the first identifier of the first communication node and the transmission beam identifier used for the current transmission. Different first beam training information may be sent to different second communication nodes.

Exemplarily, FIG. 6 is another schematic diagram of a first communication node sending first beam training information according to some embodiments. Assuming that the transmission beams of the first communication node include beam 1, beam 2, beam 3, and beam 4, different PSSCHs that the first communication node needs to send include PSSCH 1, PSSCH 2, PSSCH 3, and PSSCH 4. The first communication node may send the PSSCH 1 based on the beam 1, and the PSSCH 1 includes the first identifier a of the first communication node and the identifier of the transmission beam (i.e., transmission beam identifier 1) used for the current PSSCH transmission. Afterwards, the first communication node may send the PSSCH 2 based on the beam 2, and the PSSCH 2 includes the first identifier a of the first communication node and the identifier of the transmission beam (i.e., transmission beam identifier 2) used for the current transmission. Afterwards, the first communication node may send the PSSCH 3 based on the beam 3, and the PSSCH 3 includes the first identifier a of the first communication node and the identifier of the transmission beam (i.e., transmission beam identifier 3) used for the current transmission. Afterwards, the first communication node may send the PSSCH 4 based on the beam 4, the PSSCH 4 includes the first identifier a of the first communication node and the identifier of the transmission beam (i.e., transmission beam identifier 4) used for the current transmission. In some embodiments, each PSSCH may be retransmitted in the manner of the above Example 3.

In the above example, each transmission of the PSSCH contains the first beam training information, that is, the sent PSSCH contains the first identifier a of the first communication node and the transmission beam identifier of the first communication node used for the current PSSCH transmission. Generally, the initial transmission and re-transmission of the PSSCH may be understood as the initial transmission and re-transmission of other data contained in the PSSCH, and the other data includes any SL data or SL transmission block other than the first beam training information. In addition, regardless of whether the transmission contains other data, a transmission (i.e., an initial transmission or a re-transmission) may also be understood as sending the beam training information once. For the communication node, different transmission beams may be used for each transmission of the beam training information. That is, the transmission beam identifier of the communication node in each transmission of the beam training information may be different, because the transmission beam used in each transmission is the transmission beam corresponding to the transmission beam identifier of the communication node in the beam training information.

The above examples are described by taking an example in which the "channel or signal containing the first beam training information" is the PSSCH, and are also applicable to a case where the "channel or signal containing the first beam training information" is an S-SSB or a PSFCH, and it is possible to replace "PSSCH" in the above examples with "S-SSB" or "PSFCH", respectively.

In some embodiments, the first communication node may also receive the beam report information sent by the second communication node. The beam report information includes the first identifier of the first communication node and a preferred transmission beam identifier of the first communication node. For the description of the second communication node, reference may be made to the description of the second communication node in S201 below, which will not be repeated herein.

In some embodiments, the first communication node receives the beam report information sent by the second communication node, and may select a transmission beam when sending data to the second communication node according to the beam report information. For example, assuming that the beam report information sent by the second communication node contains two preferred transmission beams of the first communication node, and when the first communication node has data to be sent to the second communication node, the first communication node may select a preferred transmission beam from the two preferred transmission beams for sending data to the second communication node.

In some embodiments, the first communication node may receive beam report information from one or more second communication nodes.

In some embodiments, FIG. 7 is a beam training method according to some embodiments, the method is applied to a second communication node, and the method includes the following contents.

S201, the second communication node receives first beam training information sent by a first communication node.

For the description of the first beam training information, reference may be made to the description of the first beam training information in the above S101, which will not be repeated herein. The second communication node may be understood as a target communication node in the SL communication system. Exemplarily, the second communication node may be the terminal 22 in the communication system shown in the above FIG. 1.

It should be noted that, any communication node that receives the first beam training information sent by the first communication node may be regarded as the second communication node. That is, when the channel or signal including the first beam training information also includes other data, the second communication node may not be the target second communication node to which the first communication node sends the other data. For example, UE 1 (i.e., the first communication node) contains the first beam training information in the SCI of the PSSCH, and the SCI indicates that the target UE corresponding to the PSSCH transmission is UE 2. Then, except for UE 1, any UE that detects the first beam training information sent by the UE 1 is the second communication node. Of course, UE 2 is also the second communication node. Exemplarily, the second communication node may be the terminal 22 or the terminal 23 in the communication system shown in the above FIG. 1.

S202, the second communication node obtains beam report information based on the first beam training information.

The beam report information includes the first identifier of the first communication node and the preferred transmission beam identifier of the first communication node.

As an example, the second communication node obtaining the beam report information based on the first beam training information may be implemented as follows.

S1, the second communication node performs measurement based on the first beam training information to obtain a measurement result.

In some embodiments, the second communication node may obtain the measurement result based on measurement for a reference signal corresponding to the first beam training information, and the measurement result includes a measurement value of the reference signal. The reference signal corresponding to the first beam training information may be a demodulation reference signal (DMRS) (for example, DMRS of PSCCH, DMRS of PSSCH, DMRS of PSBCH, DMRS of PSFCH), a phase tracking-reference signal (PT-RS), and a channel state information-reference signal (CSI-RS), etc., corresponding to the channel including the first beam training information, or a signal including the first beam training information (for example, S-PSS, S-SSS). That is, the second communication node may perform the measurement based on any one or more of the DMRS, PT-RS or CSI-RS corresponding to the channel including the first beam training information, or perform the measurement based on the signal carrying the first beam training information, to obtain the measurement value, i.e., obtain the measurement result.

In some embodiments, the reference signal corresponding to the first beam training information may be the CSI-RS, and the CSI-RS may be a CSI-RS transmitted in a channel transmission including the first beam training information (for example, the channel and the CSI-RS are transmitted in a resource allocated to the channel including the first beam training information), or a CSI-RS associated with the transmission beam identifier of the first communication node in the first beam training information (e.g., the transmission beam identifier is an index of the CSI-RS, the channel and the CSI-RS are transmitted in a resource allocated to the channel including the first beam training information, or the channel including the first beam training information and the CSI-RS are transmitted on different resources, and the different resources may be different symbols within a slot, or different slots).

It should be noted that, in a case where the channel including the first beam training information is the S-SSB, the second communication node may measure the DMRS of the PSBCH in the S-SSB to acquire the measurement value, or the second communication node may also measure the P-SSS in the S-SSB to acquire the measurement value, or the second communication node may also measure the S-SSS in the S-SSB to acquire the measurement value, or measure any one or more of the DMRS of the PSBCH, S-PSS or S-SSS in the S-SSB to acquire the measurement value. In a case where the channel including the first beam training information is the PSFCH, the second communication node may measure the DMRS of the PSFCH to acquire the measurement value.

As an example, the measurement value may be reference signal received power (RSRP), a reference signal received quality (RSRQ), or a signal to interference plus noise ratio (SINR), which is not limited to the embodiments of the present disclosure.

In some embodiments, a type of the measurement value may be configured or pre-configured, or pre-defined by a higher layer entity.

S2, the second communication node obtains the beam report information based on the measurement result.

As an example, the second communication node may measure the reference signal corresponding to the first beam training information, and select one or more transmission beams corresponding to one or more reference signals as preferred transmission beams of the first communication node.

As an example, the second communication node may determine one or more target measurement values from measurement values included in the measurement result, based on sizes of the measurement values included in the measurement result, and then take transmission beams corresponding to the one or more target measurement values as the preferred transmission beams of the first communication node.

The one or more target measurement values may be the first M measurement values with the largest measurement values among the measurement values included in the measurement result, where M is a positive integer. Alternatively, the one or more target measurement values may be one or more measurement values with measurement values greater than a measurement value threshold among the measurement values included in the measurement result. The measurement value threshold may be a measurement value threshold configured or pre-configured, or pre-defined by a higher layer entity.

In some embodiments, a maximum number of preferred transmission beam identifiers contained in the beam report information is determined according to any one of higher layer configuration, pre-configuration, or pre-definition, and for example, the maximum number of preferred transmission beam identifiers contained in the beam report information is determined to be 2 by any one of higher layer configuration, pre-configuration, or pre-definition. That is, the number of the preferred transmission beam identifiers included in the beam report information may include 2.

In some embodiments, the second communication node may obtain the beam report information based on the measurement result for the reference signal corresponding to the first beam training information within a preset time period.

The preset time period may also be referred to as a valid time. The preset time period may refer to a period of time before the second communication node sends the beam report information. The second communication node determines the beam report information according to the measurement result obtained by measuring the reference signal corresponding to the first beam training information (for example, the signal containing the first beam training information or the reference signal corresponding to the channel containing the first beam training information) within the preset time period. For example, the preset time period is defined as a slot range [n-N, n-1], where n is an index of a slot in which the second communication node sends the beam report information, and N is a positive integer configured or pre-configured or pre-defined by a higher layer entity, or the value of N depends on implementations of the second communication node. The slot here may be a physical slot, or a slot in a sidelink resource pool (i.e., a logical slot). The pre-configuration is pre-configured when the second communication node leaves the factory, and may be modified later by the network or manually. The pre-definition is already specified in a communication protocol and cannot be changed.

Exemplarily, FIG. 8 is a schematic diagram of a second communication node sending beam report information according to some embodiments. Assuming that the preset time period is defined as a slot range [n-10, n-1], that is, N=10, first beam training information sent by the first communication node on the slot n-10 includes the first identifier a of the first communication node and the transmission beam identifier 2 of the first communication node, first beam training information sent by the first communication node on the slot n-5 includes the first identifier a of the first communication node and the transmission beam identifier 3 of the first communication node, first beam training information sent by the first communication node on the slot n-1 includes the first identifier a of the first communication node and the transmission beam identifier 4 of the first communication node, and slot n is a slot on which the second communication node sends the beam report information, then the second communication node determines the beam report information according to the measurement result of the first beam training information in the slot range [n-10, n-1]. Assuming that within the slot range [n-10, n-1], the measurement result is that the measurement values of the signal containing the first beam training information or the reference signal corresponding to the channel containing the first beam training information on the slot n-10 and slot n-5 exceeds the measurement value threshold, then the beam report information includes: the first identifier a of the first communication node, and the preferred transmission beam identifier 2 and the preferred transmission beam identifier 3 of the first communication node.

The above embodiments are described by taking an example in which the second communication node receives the first beam training information sent by one first communication node. In some embodiments, if the second communication node receives first beam training information sent by a plurality of first communication nodes, the second communication node may, based on the measurement result of the reference signal corresponding to each first beam training information; or based on the measurement result of the reference signal corresponding to each first beam training information within a preset time period, determine the preferred transmission beam of each first communication node, and then determine the beam report information, where the beam report information includes the first identifier of each first communication node and the preferred transmission beam identifier of each first communication node. For the description of the reference signal corresponding to the beam training information, reference may be made to the above embodiments, which will not be repeated herein.

As an example, a maximum number of first communication nodes contained in the beam report information is determined according to higher layer configuration or pre-configuration, or pre-definition. For example, the maximum number of first communication nodes contained in the beam report information is 2, that is, the beam report information contains the first identifiers and preferred transmission beam identifiers of at most two first communication nodes.

Exemplarily, assuming that the two first communication nodes are the first communication node 1 and the first communication node 2, respectively, the second communication node determines two preferred transmission beams of the first communication node 1, and preferred transmission beam identifiers corresponding to the two preferred transmission beams are B11 and B12, and the second communication node determines two preferred transmission beams of the first communication node 2, and preferred transmission beam identifiers corresponding to the two preferred transmission beams are B21 and B22, then the beam report information may include the first identifier of the first communication node 1 and the two preferred transmission beam identifiers B11 and B12, and the first identifier of the first communication node 2 and the two preferred transmission beam identifiers B21 and B22.

In some embodiments, the beam report information may also include a measurement value corresponding to each preferred transmission beam of the first communication node.

Exemplarily, assuming that the first communication node is UE 1, the preferred transmission beam identifier of the UE 1 includes B1 and B2, measurement values of the preferred transmission beams are RSRP measurement values of the preferred transmission beams, and the beam report information determined by the second communication node may include: the first identifier of the UE 1, the preferred transmission beam identifier B1 of the UE 1, the preferred transmission beam identifier B2 of the UE 1, measurement value RSRP 1 of the preferred transmission beam corresponding to the B1 (that is, the measurement value RSRP 1 corresponding to the preferred transmission beam B1), and measurement value RSRP 2 of the preferred transmission beam corresponding to the B2 (that is, the measurement value RSRP 2 corresponding to the preferred transmission beam B2).

In some embodiments, in a case where the beam report information includes the measurement value of the preferred transmission beam corresponding to the preferred transmission beam identifier of the first communication node, if the first communication node has a plurality of preferred transmission beam identifiers, the measurement values of the plurality of preferred transmission beams corresponding to the plurality of preferred transmission beam identifiers may be reported by combining an absolute value and relative value(s), that is, the measurement values corresponding to the plurality of preferred transmission beams may be reported by combining an absolute value and relative value(s).

As an example, a maximum measurement value among the measurement values of the plurality of preferred transmission beams is reported by an absolute value, and the other measurement values are reported by relative value(s). Exemplarily, assuming that the first communication node is the UE 1, the preferred transmission beam identifiers of the UE 1 includes B1 and B2, and the measurement values of the preferred transmission beams are the RSRP measurement values of the preferred transmission beams, and assuming that the RSRP measurement value of the preferred transmission beam corresponding to the preferred transmission beam identifier B1 of the UE 1 is the largest, which is -40 dBm, the RSRP measurement value of the preferred transmission beam corresponding to the preferred transmission beam identifier B2 of the UE 1 is lower than the RSRP measurement value of the preferred transmission beam corresponding to the preferred transmission beam identifier B1 by 2 dBm, that is, the RSRP measurement value of the preferred transmission beam corresponding to the preferred transmission beam identifier B2 of the UE 1 is -42 dBm, then, the beam report information determined by the second communication node may include: the first identifier of the UE1, the preferred transmission beam identifier B1 of the UE1, the preferred transmission beam identifier B2 of the UE1, an absolute value 40 dBm of the measurement value of the preferred transmission beam corresponding to B1, and a relative value -2 dBm of the measurement value of the preferred transmission beam corresponding to B2 with respect to the measurement value of the preferred transmission beam corresponding to B1.

S203, the second communication node sends the beam report information.

In some embodiments, the beam report information may be sent based on any SL signal or SL channel. Exemplarily, the beam report information may be sent through any one of a physical sidelink control channel (PSCCH), a physical sidelink shared channel (PSSCH), a physical sidelink synchronization signal block (S-SSB), or a physical sidelink feedback channel (PFSCH).

In some embodiments, the beam report information is sent through a physical sidelink shared channel, and both the second-stage SCI and the MAC CE of the physical sidelink shared channel contain the beam report information; or only the MAC CE of the physical sidelink shared channel contains the beam report information.

In some embodiments, the beam report information is sent based on the PSSCH, and the PSSCH may also include other signals (such as CSI-RS, PT-RS, etc.) sent together with the beam report information.

In some embodiments, a transmission type of the channel or signal containing the beam report information may be any one of unicast, multicast, or broadcast. Exemplarily, beam report information is transmitted through the PSSCH, and the transmission type of the PSSCH is unicast.

In some embodiments, the channel or signal containing the beam report information may also contain other data. For example, the other data may be any sidelink information (including higher layer data, higher layer signaling, broadcast information, or HARQ-related information, etc.) other than the beam report information.

In some embodiments, the beam report information is sent through the PSSCH (for example, carried in an MAC CE on the PSSCH), and first-stage SCI on a PSCCH associated with the PSSCH or the second-stage SCI on the PSSCH includes beam report indication information, and the beam report indication information is used to indicate whether the PSSCH carries the beam report information. For example, if the beam report information is contained in the MAC CE of the PSSCH sent by the second communication node, the second communication node may indicate, in the second-stage SCI of the PSSCH, whether the MAC CE of the PSSCH contains (i.e., carries) the beam report information.

In some embodiments, the beam report information is sent through the PSSCH, the first-stage SCI of the PSSCH indicates a format of the second-stage SCI (i.e., 2nd-stage SCI format), and the second-stage SCI includes the beam report information. That is, the beam report information is contained in the second-stage SCI on the PSSCH, and the first-stage SCI on the PSCCH associated with the PSSCH indicates the format of the second-stage SCI.

As an example, the second communication node sending the beam report information may include the following contents.

S1, establish a mapping relationship between the first identifier of the first communication node and a second identifier of the first communication node.

The second identifier of the first communication node is a source identifier of the first communication node, contained in a channel or a signal including the first beam training information sent by the first communication node. That is, the channel or signal including the first beam training information sent by the first communication node includes not only the first identifier of the first communication node, but also the source identifier of the first communication node.

The second communication node, after receiving the channel or signal including the first beam training information sent by the first communication node, acquires the first identifier of the first communication node and the second identifier of the first communication node from the channel or signal including the first beam training information, and then establishes the mapping relationship (also referred to as a binding relationship) between the first identifier of the first communication node and the second identifier of the first communication node.

S2, send the beam report information based on the mapping relationship between the first identifier of the first communication node and the second identifier of the first communication node.

For example, the first communication node sends the first beam training information by beam scanning, and the first beam training information is contained in the second-stage SCI or MAC CE of the PSSCH and the PSSCH also contains a direct communication request (DCR) message and the second identifier of the first communication node. Alternatively, the first beam training information is contained in a PSCCH, and a PSSCH associated with the PSCCH contains the DCR and the second identifier of the first communication node. Alternatively, the first beam training information is contained in the S-PSS or S-SSS of the S-SSB, and the PSBCH in the S-SSB contains the DCR and the second identifier of the first communication node. Alternatively, the first beam training information, the second identifier of the first communication node, and the DCR are contained in the PSFCH. The first communication node sends the SL channel or the SL signal, containing the first beam training information, the second identifier of the first communication node, and the DCR. The second communication node, after receiving the SL channel or the SL signal sent by the first communication node, obtains the first identifier of the first communication node and the second identifier of the first communication node, and establishes the mapping relationship between the first identifier of the first communication node and the second identifier of the first communication node. Therefore, the second communication node sets an identifier (i.e., a destination ID) of the target communication node corresponding to security establishment related information as the second identifier of the first communication node, and sends the security establishment related information and the beam report information to the first communication node, the beam report information contains the first identifier of the first communication node and the preferred transmission beam identifier of the first communication node, or the beam report information only contains the preferred transmission beam identifier of the first communication node.

For another example, the first communication node sends the first beam training information by beam scanning, and the first beam training information is contained in the second-stage SCI or MAC CE of the PSSCH, and the PSSCH also contains other data and the second identifier of the first communication node. Alternatively, the first beam training information is contained in a PSCCH, and a PSSCH associated with the PSCCH contains other data and the second identifier of the first communication node. Alternatively, the first beam training information is contained in the S-PSS or S-SSS of the S-SSB, and the PSBCH in the S-SSB contains the other data and the second identifier of the first communication node. Alternatively, the first beam training information, the second identifier of the first communication node, and the other data are contained in the PSFCH. The other data may be any sidelink data. The first communication node sends the SL channel or the SL signal, containing the first beam training information, the second identifier of the first communication node and other data. The second communication node, after receiving the SL channel or the SL signal sent by the first communication node, obtains the first identifier of the first communication node and the second identifier of the first communication node, and intends to establish a unicast link with the first communication node. Therefore, the second communication node sets an identifier (i.e., a destination ID) of the target communication node corresponding to the DCR as the second identifier of the first communication node, and sends the DCR and the beam report information to the first communication node, and the beam report information includes the first identifier of the first communication node and the preferred transmission beam identifier of the first communication node, or the beam report information only contains the preferred transmission beam identifier of the first communication node.

Generally, the communication node, when sending the PSSCH, includes the source identifier of the communication node in the SCI and/or MAC CE. For example, the source identifier of the communication node is 24 bits in total, where 8 bits are contained in the second-stage SCI of the PSSCH, and the remaining 16 bits are contained in the MAC CE of the PSSCH.

In some embodiments, in a case where the first beam training information includes a channel state information request, the second communication node may also determine whether to report the channel state information to the first communication node according to the channel state information request included in the first beam training information. The channel state information includes at least one of: a channel quality indicator (CQI), a rank indication (RI), and a precoding matrix indicator (PMI).

For example, the first communication node sends the PSSCH to the second communication node, and sets the channel state information request to 1 in the second-stage SCI of the PSSCH (i.e., requesting the second communication node to report the channel state information), then, the second communication node may perform measurement based on one or more of the DMRS of the PSCCH corresponding to the PSSCH, or the DRMS, PT-RS or CSI-RS of the PSSCH, to acquire the channel state information, and then report the channel state information to the first communication node.

In some embodiments, whether the second communication node sends the beam report information depends on implementations of the second communication node.

In some embodiments, when the second communication node has SL data to be sent to the first communication node, the second communication node sends the SL data together with the beam report information. The beam report information contains the first identifier of the first communication node and the preferred transmission beam identifier of the first communication node.

In some embodiments, when the second communication node has SL data to be sent to the first communication node, the second communication node sends the SL data together with the beam report information. The beam report information only contains the preferred transmission beam identifier of the first communication node. For example, when the second communication node sends the SL data, it already contains the source identifier (that is, the destination ID corresponding to the SL data) of the first communication node, and the first communication node, after receiving the SL data and the beam report information, may know that the preferred transmission beam in the beam report information is its own preferred transmission beam according to the destination ID corresponding to the SL data.

In some embodiments, the second communication node, in addition to sending the beam report information, may also send the second beam training information, which may be implemented as the following contents.

X1, the second communication node determines the second beam training information.

The second beam training information includes a first identifier of the second communication node and a transmission beam identifier of the second communication node.

In some embodiments, the first identifier of the second communication node may also be referred to as an additional identifier of the second communication node. The first identifier of the second communication node is an identifier used to identify the second communication node and related to beam training, and may be allocated by the second communication node itself, or may be configured for the second communication node by a higher layer entity or be pre-configured. The first identifier of the second communication node may also be understood as an identifier used to identify the second communication node and related to a beam. In some embodiments, the second beam training information is applicable to beam-based operations (e.g., at least one of beam maintenance, beam measurement, interference measurement, and channel measurement). As an example, the first identifier of the second communication node may also be a source identifier of the second communication node.

X2, the second communication node sends the second beam training information.

That is, the second communication node, when sending the beam report information, may also send the second beam training information.

Similar to the first communication node sending the first beam training information as mentioned above, the second communication node may also send the second beam training information through any SL signal or SL channel. For the descriptions of the second communication node sending the beam report information and the second beam training information, reference may be made to the above description of the second communication node sending the beam report information and the above description about the first communication node sending the first beam training information in S102, respectively. For example, in S102, the "first communication node" and "first beam training information" are replaced by the "second communication node" and "second beam training information", which are not repeated herein.

In some embodiments, the second beam training information sent by the second communication node may be used by other SL UEs to perform measurement on a reference signal corresponding to the second beam training information, thereby acquiring the preferred transmission beam of the second communication node. The other UEs may also send the preferred transmission beam of the second communication node to the second communication node, or send the first identifier of the second communication node and the preferred transmission beam of the second communication node to the second communication node. For the description of the reference signal corresponding to the second beam training information, reference may be made to the above description about the reference signal corresponding to the first beam training information in S202. For example, in S202, the "first communication node" and the "first beam training information" are replaced with the "second communication node" and the "second beam training information", respectively, which will not be repeated herein.

In some embodiments, whether the second communication node sends the beam report information depends on implementations of the second communication node.

In some embodiments, whether the second communication node sends the second beam training information depends on implementations of the second communication node.

In the embodiments of the present disclosure, the first communication node determines the first beam training information, and sends the first beam training information to the second communication node based on the transmission beam of the first communication node, so that the second communication node that receives the first beam training information performs the measurement according to the first beam training information to acquire the preferred transmission beam identifier of the first communication node, and then sends the beam report information including the preferred transmission beam identifier of the first communication node to the first communication node, to inform the first communication node of the preferred transmission beam to be used for communication. Thus, the beam training between communication nodes (i.e., UEs) is completed, and the preferred transmission beam used for communication between UEs is determined.

The above introduces the solutions provided by the present disclosure mainly from the perspective of interaction between various nodes. It can be understood that, in order to implement the above functions, the various nodes (e.g., terminal) contain corresponding hardware structures and/or software modules for performing various functions. Those skilled in the art should easily realize that the present disclosure can be implemented in the form of hardware or a combination of hardware and computer software, in combination with the algorithm steps of various examples described in the embodiments disclosed herein. Whether a certain function is performed by hardware or by computer software driving hardware, depends on the specific applications and design constraint conditions of the technical solution. Professional technicians may use different methods to implement the described functions, for each specific application, but this implementation should not be considered beyond the scope of the present disclosure.

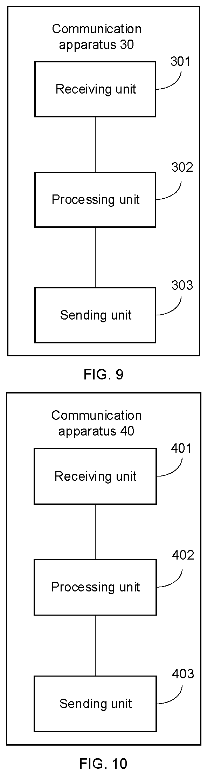

FIG. 9 is a schematic diagram of components of a communication apparatus according to some embodiments. As shown in FIG. 9, the communication apparatus 30 includes a receiving unit 301, a processing unit 302, and a sending unit 303.

The communication apparatus 30 may be the above-mentioned first communication node or a chip in the first communication node. When the communication apparatus 30 is configured to implement the functions of the first communication node in the above embodiments, the respective units are configured to implement the following functions.

The processing unit 302 is configured to determine first beam training information, where the first beam training information includes a first identifier of the first communication node and a transmission beam identifier of the first communication node.

The sending unit 303 is configured to send the first beam training information based on a transmission beam of the first communication node.

In some embodiments, the first beam training information is sent through any one of a physical sidelink control channel, a physical sidelink shared channel, a physical sidelink synchronization signal block or a physical sidelink feedback channel.

In some embodiments, the first beam training information is sent through the physical sidelink shared channel, and first-stage sidelink control information or second-stage sidelink control information in a physical sidelink control channel associated with the physical sidelink shared channel includes beam training indication information, and the beam training indication information is used to indicate whether the physical sidelink shared channel carries the first beam training information.

In some embodiments, the first beam training information is sent through the sidelink synchronization signal block, and the first identifier of the first communication node and the transmission beam identifier of the first communication node are carried in at least one of a physical sidelink broadcast channel, a sidelink primary synchronization signal sequence or a sidelink secondary synchronization signal sequence.

In some embodiments, the first identifier of the first communication node and the transmission beam identifier of the first communication node are carried on the physical sidelink broadcast channel; or, the first identifier of the first communication node is carried in the sidelink primary synchronization signal sequence and/or the sidelink secondary synchronization signal sequence, and the transmission beam identifier of the first communication node is carried on the physical sidelink broadcast channel; or, the transmission beam identifier of the first communication node is carried in the sidelink primary synchronization signal sequence and/or the sidelink secondary synchronization signal sequence, and the first identifier of the first communication node is carried on the physical sidelink broadcast channel.

In some embodiments, the first beam training information is sent through the sidelink synchronization signal block, and a sidelink primary synchronization signal sequence of the sidelink synchronization signal block is used to indicate that the sidelink primary synchronization signal block is used for synchronization or beam training.

In some embodiments, the first identifier of the first communication node is an identifier used to identify the first communication node and related to beam training.

In some embodiments, the receiving unit 301 is configured to receive beam report information sent by a second communication node, where the beam report information includes the first identifier of the first communication node and a preferred transmission beam identifier of the first communication node.

FIG. 10 is a schematic diagram of components of another communication apparatus according to some embodiments. As shown in FIG. 10, the communication apparatus 40 includes a receiving unit 401, a processing unit 402, and a sending unit 403.

The communication apparatus 40 may be the above-mentioned second communication node or a chip in the second communication node. When the communication apparatus 40 is configured to implement the functions of the second communication node in the above embodiments, the respective units are configured to implement the following functions.

The receiving unit 401 is configured to receive first beam training information sent by a first communication node, where the first beam training information includes a first identifier of the first communication node and a transmission beam identifier of the first communication node.

The processing unit 402 is configured to obtain beam report information based on the first beam training information, where the beam report information includes the first identifier of the first communication node and a preferred transmission beam identifier of the first communication node.

The sending unit 403 is configured to send the beam report information.

In some embodiments, the processing unit 402 is configured to obtain the beam report information based on a measurement result for a reference signal corresponding to the first beam training information within a preset time period.

In some embodiments, a maximum number of preferred transmission beam identifiers included in the beam report information is determined according to any one of higher layer configuration, pre-configuration or pre-definition.

In some embodiments, the beam report information is sent through any one of a physical sidelink control channel, a physical sidelink shared channel, a sidelink synchronization signal block or a physical sidelink feedback channel.

In some embodiments, the beam report information is sent through the physical sidelink shared channel, and first-stage sidelink control information of the physical sidelink shared channel is used to indicate a format of second-stage sidelink control information of the sidelink shared channel.

In some embodiments, the beam report information is sent through the physical sidelink shared channel, and first-stage sidelink control information of a physical sidelink control channel associated with the physical sidelink shared channel or second-stage sidelink control information of the physical sidelink shared channel includes beam report indication information, and the beam report indication information is used to indicate whether the physical sidelink shared channel carries the beam report information.

In some embodiments, the beam report information is sent through a physical sidelink shared channel, and both second-stage SCI and MAC CE of the physical sidelink shared channel contain the beam report information; or only MAC CE of the physical sidelink shared channel contains the beam report information.

In some embodiments, the sending unit 403 is configured to: establish a mapping relationship between the first identifier of the first communication node and a second identifier of the first communication node, where the second identifier of the first communication node is a source identifier of the first communication node, included in a channel or a signal including the first beam training information sent by the first communication node; and send the beam report information based on the mapping relationship between the first identifier of the first communication node and the second identifier of the first communication node.

It should be noted that, the units in FIG. 9 and FIG. 10 may also be referred to as modules, and for example, the sending unit may be referred to as a sending module. In addition, in the embodiments shown in FIG. 9 and FIG. 10, the names of the various units may not be the names shown in the figures, and for example, the sending unit may also be referred to as a communication unit, and the receiving unit may also be referred to as a communication unit.

If the respective units in FIG. 9 and FIG. 10 are implemented in the form of a software functional module, and sold or used as an independent product, the respective units may be stored in a computer readable storage medium. Based on this understanding, the technical solutions of the embodiments of the present disclosure may be essentially, or a part of the technical solutions that contributes to the existing technology, or a part of all of the technical solutions, may be embodied in the form of a software product, and the computer software product is stored in a storage medium, and includes a plurality of instructions to cause a computer device (which may be a personal computer, a server, a network device, etc.) or processor to perform a part or all of the steps of the methods of various embodiments of the present disclosure. The storage medium storing the computer software product includes various types of medium capable of storing program codes, such as a U disk (USB flash disk), a mobile hard disk, a read-only memory (ROM), a random access memory (RAM), a magnetic disk, or an optical disk, etc.

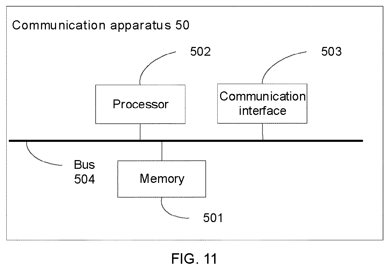

In a case where the above communication apparatus 30 and communication apparatus 40 implement the functions of the above integrated modules in the form of hardware, the embodiments of the present disclosure provide a structural schematic diagram of a communication apparatus, as shown in FIG. 11. The communication apparatus 50 includes a processor 502, a communication interface 503, and a bus 504. In some embodiments, the communication apparatus 50 may also include a memory 501.

The processor 502 may implement or perform various exemplary logical blocks, modules and circuits described in conjunction with the content disclosed in the present disclosure. The processor 502 may be a central processing unit, a general-purpose processor, a digital signal processor, an application specific integrated circuit, a field programmable gate array or other programmable logic devices, a transistor logic device, a hardware component or any combination thereof. The processor 502 may implement or perform various exemplary logical blocks, modules and circuits described in conjunction with the content disclosed in the present disclosure. The processor 502 may also be a combination that implements computing functions, for example, including a combination of one or more microprocessors, a combination of a digital signal processor (DSP) and a microprocessor, or the like.

The communication interface 503 is configured to connect with other devices via a communication network. The communication network may be an Ethernet, a radio access network, a wireless local area network (WLAN), or the like.

The memory 501 may be, but be not limited to, a read-only memory (ROM) or other types of static storage devices capable of storing static information and instructions, a random access memory (RAM) or other types of dynamic storage devices capable of storing information and instructions, or may also be an electrically erasable programmable read-only memory (EEPROM), a magnetic disk storage medium or other magnetic storage devices, or any other medium capable of being used to carry or store the desired program codes in the form of instructions or data structures and capable of being accessed by a computer.

As an implementation, the memory 501 may exist independently of the processor 502, and the memory 501 may be connected to the processor 502 via the bus 504 and is used for storing instructions or program codes. The processor 502, when calling and executing the instructions or program codes stored in the memory 501, is capable of implementing the beam training method provided in the embodiments of the present disclosure.

As another implementation, the memory 501 may be integrated with the processor 502.

The bus 504 may be an extended industry standard architecture (EISA) bus or the like. Buses 504 may be divided into address buses, data buses, control buses, and the like. For the convenience of representation, only one thick line is used in FIG. 11 for representation, but it does not mean that there is only one bus or one type of bus.

From the description of the above implementations, those skilled in the art can clearly understand that, for convenience and brevity of description, only the division of the above-mentioned various functional modules is illustrated by way of example, and in actual applications, the above-mentioned functions may be allocated to be completed by different functional modules as needed. That is, an internal structure of the base station or the terminal is divided into different functional modules to complete all or a part of the functions mentioned above.

The embodiments of the present disclosure further provide a computer readable storage medium. All or a part of the procedures in the method embodiments mentioned above may be completed by related hardware indicated by computer instructions. The program may be stored in above-mentioned computer readable storage medium. The program, when executed, may include procedures of the various method embodiments described above. The computer readable storage medium may be or the memory of any one of the aforementioned embodiments. The above-mentioned computer readable storage medium may also be an external storage device of the above-mentioned base station or terminal, such as a plug-in hard disk, a smart memory card (smart media card, SMC), a secure digital (SD) card, a flash card, etc., equipped on the above-mentioned base station or terminal. Furthermore, the above-mentioned computer readable storage medium may include both an internal storage unit and an external storage device of the above-mentioned base station or terminal. The above-mentioned computer readable storage medium is used to store the above-mentioned computer program and other programs and data required for the above-mentioned base station or terminal. The above-mentioned computer readable storage medium may also be used to temporarily store data that has been output or is to be output. The readable storage medium includes a non-transitory computer readable storage medium.

The embodiments of the present disclosure provide a computer program product, the computer product contains a computer program, the computer program product, when executed on a computer, causes the computer to perform any beam training method provided in the above embodiments.

Although the present disclosure is described herein in conjunction with various embodiments, other variations of the disclosed embodiments may be understood and implemented by those skilled in the art by viewing the drawings, the disclosed content, and the appended claims, during implementing the claimed present disclosure. In the claims, the word "include/includes/including" does not exclude other components or steps, and "a/an" or "one" does not exclude multiple cases. A single processor or other unit may implement several functions listed in the claims. A fact that some measures are documented in dependent claims different from each other does not mean that these measures cannot be combined to exert a good effect.

Although the present disclosure is described in conjunction with the detailed features and embodiments thereof, it is apparent that various modifications and combinations may be made thereto without departing from the spirit and scope of the present disclosure. Correspondingly, the specification and drawings herein are merely exemplary illustrations of the present disclosure as defined by the appended claims and are deemed to cover any and all modifications, variations, combinations or equivalents within the scope of the present disclosure. Obviously, those skilled in the art may make various modifications and variants to the present disclosure without departing from the spirit and scope of the present disclosure. In this way, if these modifications and variants of the present disclosure fall within the scope of the claims of the present disclosure and their equivalent technologies, the present disclosure is also intended to contain these modifications and variants.

The above descriptions are only specific implementations of the present disclosure, but the protection scope of the present disclosure is not limited thereto, any variations or replacements within the technical scope disclosed in the present disclosure shall be included in the protection scope of the present disclosure. Therefore, the protection scope of the present disclosure should be determined based on the protection scope of claims.

## Claims

1. A beam training method, **characterized in that** the method is applied to a first communication node, and comprises:
determining first beam training information, wherein the first beam training information comprises a first identifier of the first communication node and a transmission beam identifier of the first communication node; and
sending the first beam training information based on a transmission beam of the first communication node.

2. The method according to claim 1, wherein the first beam training information is sent through any one of a sidelink control channel, a sidelink shared channel, a sidelink synchronization signal block or a sidelink feedback channel.

3. The method according to claim 2, wherein the first beam training information is sent through the sidelink shared channel, and first-stage sidelink control information or second-stage sidelink control information in a sidelink control channel associated with the sidelink shared channel comprises beam training indication information, and the beam training indication information is used to indicate whether the sidelink shared channel carries the first beam training information.

4. The method according to claim 2, wherein the first beam training information is sent through the sidelink synchronization signal block, and the first identifier of the first communication node and the transmission beam identifier of the first communication node are carried in at least one of a sidelink broadcast channel, a sidelink primary synchronization signal sequence or a sidelink secondary synchronization signal sequence.

5. The method according to claim 4, wherein
the first identifier of the first communication node and the transmission beam identifier of the first communication node are carried on the sidelink broadcast channel; or
the first identifier of the first communication node is carried in the sidelink primary synchronization signal sequence and/or the sidelink secondary synchronization signal sequence, and the transmission beam identifier of the first communication node is carried on the sidelink broadcast channel; or
the transmission beam identifier of the first communication node is carried in the sidelink primary synchronization signal sequence and/or the sidelink secondary synchronization signal sequence, and the first identifier of the first communication node is carried on the sidelink broadcast channel.

6. The method according to claim 2, wherein the first beam training information is sent through the sidelink synchronization signal block, and a sidelink primary synchronization signal sequence of the sidelink synchronization signal block is used to indicate that the sidelink synchronization signal block is used for synchronization or beam training.

7. The method according to claim 1, wherein the first identifier of the first communication node is an identifier used to identify the first communication node and related to beam training.

8. The method according to claim 1, further comprising:
receiving beam report information sent by a second communication node, wherein the beam report information comprises the first identifier of the first communication node and a preferred transmission beam identifier of the first communication node.

9. A beam training method, **characterized in that** the method is applied to a second communication node, and comprises:
receiving first beam training information sent by a first communication node, wherein the first beam training information comprises a first identifier of the first communication node and a transmission beam identifier of the first communication node;
obtaining beam report information based on the first beam training information, wherein the beam report information comprises the first identifier of the first communication node and a preferred transmission beam identifier of the first communication node; and
sending the beam report information.

10. The method according to claim 9, wherein obtaining the beam report information based on the first beam training information comprises:
obtaining the beam report information based on a measurement result for a reference signal corresponding to the first beam training information within a preset time period.

11. The method according to claim 9, wherein a maximum number of preferred transmission beam identifiers comprised in the beam report information is determined according to any one of higher layer configuration, pre-configuration or pre-definition.

12. The method according to claim 9, wherein the beam report information is sent through any one of a sidelink control channel, a sidelink shared channel, a sidelink synchronization signal block or a sidelink feedback channel.

13. The method according to claim 12, wherein the beam report information is sent through the sidelink shared channel, and first-stage sidelink control information of the sidelink shared channel is used to indicate a format of second-stage sidelink control information of the sidelink shared channel.

14. The method according to claim 12, wherein the beam report information is sent through the sidelink shared channel, and first-stage sidelink control information or second-stage sidelink control information of a sidelink control channel associated with the sidelink shared channel comprises beam report indication information, and the beam report indication information is used to indicate whether the sidelink shared channel carries the beam report information.

15. The method according to claim 9, wherein sending the beam report information comprises:
establishing a mapping relationship between the first identifier of the first communication node and a second identifier of the first communication node, wherein the second identifier of the first communication node is a source identifier of the first communication node, comprised in a channel or a signal comprising the first beam training information sent by the first communication node; and
sending the beam report information based on the mapping relationship between the first identifier of the first communication node and the second identifier of the first communication node.

16. A communication apparatus, **characterized by** comprising: a processor and a memory; wherein
the memory has stored instructions executable by the processor;
the processor is configured to execute the instructions, so that the communication apparatus implements the method according to any one of claims 1 to 15.

17. A computer readable storage medium, **characterized in that** the computer readable storage medium comprises computer instructions, and the computer instructions, when executed on a computer, cause the computer to perform the method according to any one of claims 1 to 15.
